# EUROPEAN PATENT APPLICATION

(11) **EP 4 044 355 A1**
(43) Date of publication of application: **17.08.2022**
(21) Application number: 20888831.3
(22) Date of filing: 27.08.2020
(51) Int. Cl.: H01M 50/531, H01M 10/0587

(54) **ELECTRODE ASSEMBLY AND MANUFACTURING METHOD THEREFOR**

(30) Priority: 19.11.2019 KR 20190148935
(71) Applicant: LG Energy Solution, Ltd., Seoul 07335 (KR)
(72) Inventor: YUN, Su Hyun, Daejeon 34122 (KR); JUNG, Bum Young, Daejeon 34122 (KR); KIM, Kyung Min, Daejeon 34122 (KR)
(74) Representative: Plasseraud IP
(86) International application number: PCT/KR2020/011469
(87) International publication number: WO 2021/101027

(57) **Abstract**

A method for manufacturing an electrode assembly according to an embodiment of the present invention for solving the above problems includes: a step of applying an electrode active material to at least a portion of an electrode collector, which is formed by sequentially stacking a first electrode foil, an electrode insulating layer, and a second electrode foil, to manufacture an electrode; a step of stacking the electrode and a separator; and a step of connecting an electrode lead to a non-coating portion that is not coated with the electrode active material on the electrode collector, wherein, in the step of connecting the electrode lead, a coupling part passes through the electrode collector and the electrode lead together to connect the electrode collector to the electrode lead.

## Description

### CROSS-REFERENCE TO RELATED APPLICATION

The present application claims the benefit of the priority of Korean Patent Application No. 10-2019-0148935, filed on November 19, 2019, which is hereby incorporated by reference in its entirety.

### TECHNICAL FIELD

The present invention relates to an electrode assembly and a method for manufacturing the same, and more particularly, to an electrode assembly in which an electrode collector is formed in a multilayered structure including an electrode insulating layer, and only one electrode lead is connected to a non-coating portion to sufficiently supply the whole of electricity generated inside to the outside, and a method for manufacturing the same.

### BACKGROUND ART

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In order to manufacture an electrode assembly, a cathode (hereinafter, referred to as a positive electrode), a separator, and an anode (hereinafter, referred to as a negative electrode) are manufactured and stacked. Specifically, positive electrode active material slurry is applied to a positive electrode collector, and negative electrode active material slurry is applied to a negative electrode collector to manufacture a positive electrode and a negative electrode. Also, when the separator is interposed and stacked between the manufactured positive electrode and the manufactured negative electrode, unit cells are formed. The unit cells are stacked on each other to form an electrode assembly. Also, when the electrode assembly is accommodated in a specific case, and an electrolyte is injected, the secondary battery is manufactured.

However, according to the related art, the electrodes such as the positive electrode and the negative electrode are formed in a single-layer structure so that electricity flows between both surfaces of the electrode. Accordingly, when the electrode assembly is damaged due to an external impact, a short circuit occurs on one surface of the electrode, and also, the short circuit occurs on the other surface of the electrode to cause a risk of explosion or the like.

### DISCLOSURE OF THE INVENTION

### TECHNICAL PROBLEM

An object of the present invention for solving the above problems is to provide an electrode assembly in which an electrode collector is formed in a multilayered structure including an electrode insulating layer, and only one electrode lead is connected to a non-coating portion to sufficiently supply the whole of electricity generated inside to the outside, and a method for manufacturing the same.

The objects of the present invention are not limited to the aforementioned object, but other objects not described herein will be clearly understood by those skilled in the art from descriptions below.

### TECHNICAL SOLUTION

A method for manufacturing an electrode assembly according to an embodiment of the present invention for solving the above problems includes: a step of applying an electrode active material to at least a portion of an electrode collector, which is formed by sequentially stacking a first electrode foil, an electrode insulating layer, and a second electrode foil, to manufacture an electrode; a step of stacking the electrode and a separator; and a step of connecting an electrode lead to a non-coating portion that is not coated with the electrode active material on the electrode collector, wherein, in the step of connecting the electrode lead, a coupling part passes through the electrode collector and the electrode lead together to connect the electrode collector to the electrode lead.

Also, in the step of connecting the electrode lead, the electrode collector and the electrode lead may be connected to each other through rivet coupling.

Also, in the step of connecting the electrode lead, the electrode collector and the electrode lead may be connected to each other through screw coupling.

Also, in the step of connecting the electrode lead, the coupling part may be made of a conductive material.

Also, in the step of connecting the electrode lead, the coupling part may pass through all of the first electrode foil, the electrode insulating layer, and the second electrode foil of the electrode collector.

An electrode assembly according to an embodiment of the present invention for solving the above problems includes: an electrode coated with an electrode active material on at least a portion of an electrode collector; a separator stacked between the electrodes; an electrode lead connected to an non-coating portion that is not coated with the electrode active material on the electrode collector; and a coupling part configured to pass through the electrode collector and the electrode lead together so as to connect the electrode collector to the electrode lead, wherein the electrode collector is formed by sequentially stacking a first electrode foil, an electrode insulating layer, and a second electrode foil.

Also, the coupling part may include a rivet.

Also, the coupling part may include a screw.

Also, the coupling part may be made of a conductive material.

Also, the coupling part may pass through all of the first electrode foil, the insulating layer, and the second electrode foil of the electrode collector.

Particularities of other embodiments are included in the detailed description and drawings.

### ADVANTAGEOUS EFFECTS

According to the embodiments of the present invention, there are at least the following effects.

The electrode collector may be formed in the multilayered structure including the electrode insulating layer, and the conductive coupling part may pass through the non-coating portion of the electrode collector and the electrode lead together to connect the non-coating portion to the electrode lead, thereby sufficiently supplying the whole of the electricity generated inside the electrode assembly to the outside through only one electrode lead.

The effects of the prevent invention are not limited by the aforementioned description, and thus, more varied effects are involved in this specification.

### BRIEF DESCRIPTION OF THE DRAWINGS

FIG. 1 is an enlarged cross-sectional view of a cylindrical secondary battery according to an embodiment of the present invention.
FIG. 2 is a schematic side view of an electrode collector according to an embodiment of the present invention.
FIG. 3 is a schematic side view illustrating a configuration in which a plurality of electrode leads are connected to non-coating portions of positive electrode foils and negative electrode foils, respectively.
FIG. 4 is a schematic top view illustrating a configuration in which the plurality of electrode leads are connected to the non-coating portions.
FIG. 5 is a schematic bottom view illustrating a configuration in which the plurality of electrode leads are connected to the non-coating portions.
FIG. 6 is a schematic side view illustrating a configuration in which the electrode leads are respectively connected to the non-coating portions of positive electrode foils and negative electrode foils according to an embodiment of the present invention.
FIG. 7 is a schematic top view illustrating a configuration in which the electrode lead is connected to the non-coating portion.
FIG. 8 is a schematic bottom view illustrating a configuration in which the electrode lead is connected to the non-coating portion.
FIG. 9 is a schematic side view illustrating a configuration in which electrode leads are respectively connected to non-coating portions of a positive electrode foil and a negative electrode foil according to another embodiment of the present invention.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless terms used in the present invention are defined differently, all terms (including technical and scientific terms) used herein have the same meaning as generally understood by those skilled in the art. Also, unless defined clearly and apparently in the description, the terms as defined in a commonly used dictionary are not ideally or excessively construed as having formal meaning.

In the following description, the technical terms are used only for explaining a specific exemplary embodiment while not limiting the present invention. In this specification, the terms of a singular form may include plural forms unless specifically mentioned. The meaning of "comprises" and/or "including" does not exclude other components besides a mentioned component.

Hereinafter, preferred embodiments will be described in detail with reference to the accompanying drawings.

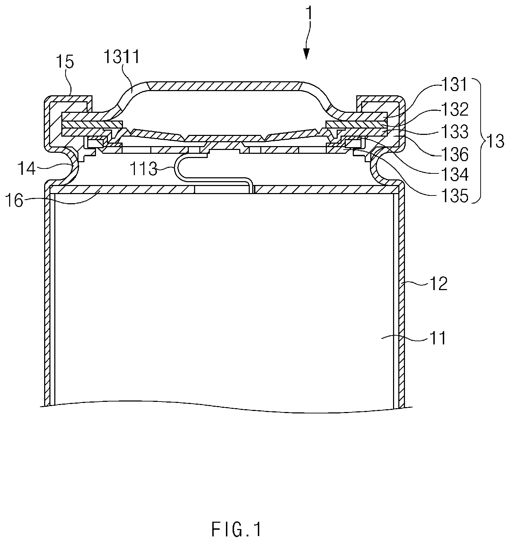

FIG. 1 is an enlarged cross-sectional view of a cylindrical secondary battery 1 according to an embodiment of the present invention.

In order to manufacture the cylindrical secondary battery 1, first, slurry in which an electrode active material, a binder, and a plasticizer are mixed is applied to a positive electrode collector 101 and a negative electrode collector 102 to manufacture electrodes such as a positive electrode and a negative electrode. Then, a separator is stacked on both sides to form an electrode assembly 11. Then, a pressure is applied from the outside to the inside on an upper portion of the battery can 12 to stretch a battery can 12, thereby forming a beading part 14. Then, the electrode assembly 11 is inserted into the battery can 12, and an electrolyte is injected into the battery can 12. Next, after seating a crimping gasket 136 on the upper portion of the beading part 14, an upper opening of the battery can 12 is sealed with the cap assembly 13. The cylindrical secondary battery 1 may be used as a power source for a mobile phone, a notebook computer, an electric vehicle, and the like, which stably supplies a constant output.

As illustrated in FIG. 1, the cylindrical secondary battery 1 includes an electrode assembly 11 having a jelly-roll shape, a cylindrical battery can 12 accommodating the electrode assembly 11 therein, a cap assembly 13 coupled to an upper portion of the battery can 12 to seal an upper opening of the battery can 12, a beading part 14 recessed inward from an upper portion of the battery can 12 so as to mount the cap assembly 13, and a crimping part 15 for sealing the battery.

The electrode assembly 11 is formed by stacking the electrodes and the separator. Particularly, the electrode assembly 11 includes two types of electrodes, such as the positive electrode and the negative electrode, and the separator interposed between the electrodes to insulate the electrodes from each other. The electrode assembly 11 may be a stack type, a jelly-roll type, a stacked and folding type, or the like. Each of the two types of electrodes, i.e., the positive electrode and the negative electrode, has a structure in which active material slurry is applied to each of the electrode collectors 101 and 102, each of which has a multilayered structure, including the electrode insulating layers 1013 and 1023. Each of the electrode collectors 101 and 102 according to an embodiment of the present invention is formed in a multilayered structure in which each of the electrode insulating layers 1013 and 1023 is stacked between two electrode foils. A detailed description of the electrode collectors 101 and 102 will be described later. The slurry may be usually formed by agitating a granular active material, an auxiliary conductor, a binder, and a plasticizer with a solvent added. The solvent may be removed in the subsequent process. Hereinafter, the electrode assembly 11 according to an embodiment of the present invention is described as being of a jelly-roll type, but this is for convenience of description and is not intended to limit the scope of rights.

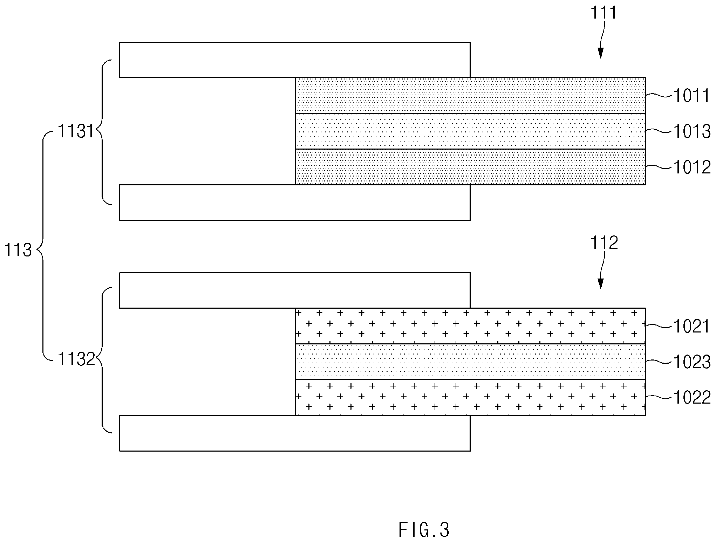

In order to manufacture the jelly-roll type electrode assembly 11, a pair of long electrodes such as a positive electrode and a negative electrode and one separator are stacked and then wound from one side to the other. Each of the electrodes of the electrode assembly 11 is constituted by a portion coated with an electrode active material and distal ends that are not coated with the electrode active material, i.e., non-coating portions 111 and 112. Also, the non-coating portions 111 and 112 (see FIG. 3) may exist at start and end in a direction in which the electrode is wound. A pair of electrode leads 113 respectively corresponding to the electrodes are connected to the non-coating portions 111 and 112. A positive electrode lead 1131 having one end connected to a positive electrode non-coating portion 111 is drawn out from an upper end of the electrode assembly 11 so that the other end is electrically connected to the cap assembly 13, and a negative electrode lead 1132 having one end connected to a negative electrode non-coating portion 112 is drawn out from a lower end of the electrode assembly 11 so that the other end is connected to a bottom portion of the battery can 12. However, the present invention is not limited thereto. For example, all the positive electrode 1131 and the negative electrode 1132 may be drawn in various directions such as a direction of the cap assembly 13.

An insulation plate 16 insulating each of the electrode assemblies 11 is disposed on each of upper and lower ends of the electrode assembly 11. The upper insulation plate 16 disposed on the upper end is disposed between the electrode assembly 11 and the cap assembly 13 to insulate the electrode assembly 11, and the bottom insulation plate (not shown) disposed on the lower end is disposed between the electrode assembly 11 and the bottom part of the battery can 12 to insulate the electrode assembly 11.

The battery can 12 is a can made of a rigid material, which accommodates the electrode assembly 11 therein. The battery can 12 may be formed in a cylindrical shape, but is formed in various shapes such as a prismatic shape according to the shape of the electrode assembly 11 so that the electrode assembly 11 is easily accommodated therein.

The battery can 12 may be made of a lightweight conductive metal material such as aluminum, nickel, stainless steel, or an alloy thereof. The battery can 12 may have an opened upper portion and a closed bottom portion that is opposite to the upper portion. A center pin (not shown) that prevents the electrode assembly 11 wound in the form of the jelly-roll from being unwound and serves as a moving path of a gas within the secondary battery 1 may be inserted into a center of the battery can 12.

The cap assembly 13 may be coupled to an opening formed in the upper end of the battery can 12 to seal the opening of the battery can 12. The cap assembly 13 may have various shapes such as a circular shape or a prismatic shape according to the shape of the battery can 12. If the battery can 12 has the cylindrical shape, the cap assembly 13 may also have a disk shape corresponding to the shape of the battery can 12.

The cap assembly 13 has a structure in which a top cap 131 sealing an opening of the battery can 12 and forming a positive electrode terminal, a PTC element 132 that interrupts current by increasing resistance when an internal temperature of the battery increases, a safety vent 133 that interrupts current when an internal pressure of the battery increases due to abnormal current and exhausts an internal gas, a CID gasket 134 electrically separating the safety vent 133 from a CID filter 135 except for a specific portion, and the CID filter 135 to which a positive electrode lead 1131 connected to a positive electrode is connected and which interrupts current when a high pressure is generated in the battery.

Also, the cap assembly 13 is installed on a beading part 14 of the battery can 12 in a state of being mounted on a crimping gasket 136. Thus, under normal operation conditions, a positive electrode of the electrode assembly 11 is electrically connected to the top cap 131 via the positive electrode lead 1131, the CID filter 135, the safety vent 133, and the PTC element 132.

The top cap 131 is disposed on the uppermost portion of the cap assembly 13 in a shape protruding upward to form the positive electrode. Thus, the top cap 131 may be electrically connected to a load or an external device such as a charging device. A gas hole 1311 through which the gas generated in the secondary battery 1 is discharged may be formed in the top cap 131. Thus, when the internal pressure increases due to the generation of the gas from the electrode assembly 11 due to overcharging or the like, a CID filter 135 of the current interrupt device and the safety vent 133 may be ruptured, and thus, the internal gas may be discharged to the outside through the ruptured portion and the gas hole 1311. Thus, the charging and discharging are not performed any more to secure safety of the secondary battery 1. The top cap 131 may be made of a metal material such as stainless steel or aluminum.

A thickness of a portion of the top cap 131, which is in contact with a positive temperature coefficient element (PTC) element 132 may not be specifically limited as long as the portion of the top cap 131 protects various components of the cap assembly 13 from a pressure applied from the outside. For example, the portion of the top cap 131 may have a thickness of 0.3 mm to 0.5 mm. When the thickness of the portion of the top cap 131 is too thin, it may be difficult to exhibit mechanical rigidity. On the other hand, when the thickness of the portion of the top cap 131 is too thick, capacity of the battery may be reduced due to an increase in size and weight when compared to the same standard.

The PTC element 132 may increase in battery resistance when the internal temperature increases to interrupt the current. That is, the PTC element 132 electrically connects the top cap 131 to the safety vent 133 in the normal state. However, in the abnormal state, for example, when the temperature abnormally increases, the PTC element 132 interrupts the electrical connection between the top cap 131 and the safety vent 133. The PTC element 132 may also vary in thickness according to the material, the structure, and the like thereof, for example, may have a thickness of 0.2 mm to 0.4 mm. When the PTC element 132 has a thickness greater than 0.4 mm, the internal resistance may increase, and also, the battery may increase in size to reduce the battery capacity when compared to the same standard. On the other hand, when the PTC element 132 has a thickness less than 0.2 mm, it may be difficult to exhibit the current interrupt effect at a high temperature, and the PCT element 112 may be destroyed by a weak external impact. Thus, the thickness of the PCT element 132 may be appropriately determined within the above-described thickness range in consideration of these points in combination.

The safety vent 133 may interrupt the current when the internal pressure of the battery increases due to the abnormal current or exhaust the gas and may be made of a metal material. The safety vent 133 has an outer peripheral portion inserted into the crimping gasket 136, and a central portion of the safety vent 133 is connected to a CID filter 135. When the internal pressure of the battery increases, the CID filter 135 is ruptured, and thus the shape of the safety vent 133 is reversed. The thickness of the safety vent 133 may vary according to a material, a structure, and the like thereof. That is, the thickness of the safety vent 133 is not specifically limited as long as the safety vent 133 discharges the gas while being ruptured when a predetermined high pressure is generated in the battery. For example, the safety vent 133 may have a thickness of 0.2 mm to 0.6 mm.

The current interrupt device (CID) may be disposed between the safety vent 133 and the electrode assembly 11 to electrically connect the electrode assembly 11 to the safety vent 133. The current interrupt device includes a CID filter 135 contacting the safety vent 133 to transmit the current and a CID gasket 134 spatially separating and isolating the CID filter 135 and the safety vent 133 from each other.

At least a portion of an upper portion of the CID filter 135 is connected to a bottom surface of the center protruding from the center of the safety vent 133, and at least a portion of a lower portion of the CID filter 135 is connected to the electrode lead 113 of the electrode assembly 11, particularly, the positive electrode lead 1131. Thus, positive current generated from the electrode assembly 11 flows into the safety vent 133 via the positive electrode lead 1131 and the CID filter 135 in a normal state so that the secondary battery is discharged. However, when the shape of the safety vent 133 is reversed due to an increase in internal pressure of the battery due to the gas generated inside the secondary battery 1, the connection between the safety vent 133 and the CID filter 135 is detached, or the CID filter 135 is ruptured. Therefore, the electrical connection between the safety vent 133 and the electrode assembly 11 may be interrupted to secure the safety.

Even when the secondary battery 1 including the above-described cap assembly 13 is used as a power source for a power tool such as an electric drill, the secondary battery 1 may instantaneously provide an high output and be stable against an external physical impact such as vibration and dropping.

The beading part 14 bent inward from the outside may be formed on the upper portion of the battery can 12. The beading part 14 may allow the cap assembly 13, on which the tap cap 131, the PTC element 132, the safety vent 133, and the current interrupt device are stacked, to be disposed on an upper end of the battery can 12, thereby preventing the electrode assembly 11 from moving vertically.

As described above, the cap assembly 13 is installed on the beading part 14 of the battery can 12 in the state of being mounted on the crimping gasket 136. The crimping gasket 136 surrounds and insulates the outermost portion of a peripheral portion of the safety vent 133. As a result, an occurrence of a short circuit due to contact between the positive current flowing through the safety vent 133 and the negative current flowing through the battery can 12 may be prevented.

The crimping gasket 136 may have a cylindrical shape with both opened ends so as to easily surround the peripheral portion of the safety vent 133. As illustrated in FIG. 1, one end of the battery can 12, which faces the inside of the battery can 12, may be primarily bent substantially vertically toward a central axis and then secondarily bent vertically toward the inside of the battery can 12 and be seated on the beading part 14. Also, the crimping gasket 136 has the other end that initially extends in a direction parallel to the central axis. However, when the cap assembly 13 is coupled, and an outer wall of the battery can 12 is pressed to perform a clamping process later, the crimping gasket 136 may be bent in a direction that is substantially vertical along the shape of the crimping part 15 to proceed to the central axis. Thus, the crimping gasket 136 has an inner circumferential surface that is in close contact with the cap assembly 13 and an outer circumferential surface that is in close contact with an inner circumferential surface of the battery can 12. Here, the crimping process means that the crimping part 15 is bent so that the crimping part 15 and the clamping gasket 136 seal an outer surface of the cap assembly 13. The crimping gasket 136 is preferably made of a material having insulation, impact resistance, elasticity, and durability, for example, a polymer such as polyolefine or polypropylene (PP).

When the electrode lead 113 is connected to the non-coating portions 111 and 112 of the electrode assembly 11, the electrode assembly 11 is inserted into the battery can 12, the positive electrode lead 1131 is connected to the CID filter of the cap assembly 13, and the negative electrode lead 1132 is connected to the bottom portion of the battery can 12. Then, an electrolyte is injected in the battery can 12. Next, after seating the crimping gasket 136 on the upper portion of the beading part 14, the upper opening of the battery can 12 is sealed with the cap assembly 13. The electrolyte may move lithium ions generated by electrochemical reaction of the electrode during charging and discharging of the secondary battery 1. The electrolyte may include a non-aqueous organic electrolyte that is a mixture of a lithium salt and a kind of high-purity organic solvent 2 or a polymer using a polymer electrolyte. The cylindrical secondary battery 1 may be manufactured through the above-described method.

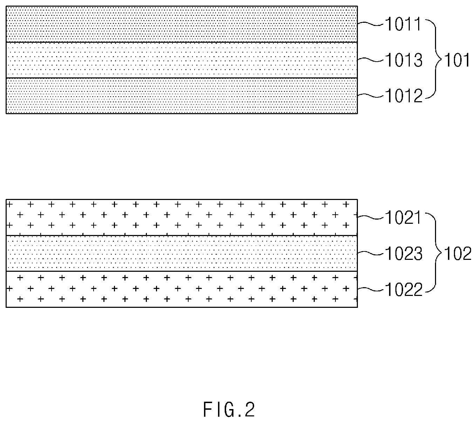

FIG. 2 is a schematic side view of the electrode collector according to an embodiment of the present invention.

As described above, the electrodes such as the positive electrode and the negative electrode are manufactured by applying slurry obtained by mixing an electrode active material, a binder, and a plasticizer to the electrode collectors 101 and 102 such as the positive electrode collector 101 and the negative electrode collector 102, respectively.

According to the related art, each of the positive electrode collector 101 and the negative electrode collector 102 is formed in a single-layered structure. Thus, when the electrode assembly 11 is damaged due to an external impact, there is a problem in that a risk of explosion due to a short circuit occurs. However, according to an embodiment of the present invention, as illustrated in FIG. 2, the electrode collectors 101 and 102 are formed in the multilayered structure in which the electrode insulating layers 1013 and 1023 are stacked between the first and second electrode foils. Particularly, the positive electrode collector 101 is formed by sequentially stacking a first positive electrode foil 1011, a positive electrode insulating layer 1013, and a second positive electrode foil 1012. Also, the negative electrode collector 102 is formed by sequentially stacking a first negative electrode foil 1021, a negative electrode insulating layer 1023, and a second negative electrode foil 1022.

Each of the first and second positive electrode foils 1011 and 1012 is made of a material having high conductivity without causing a chemical change. For example, the material may include stainless steel, aluminum, nickel, titanium, calcined carbon, or a material in which carbon, nickel, titanium, silver, or the like is surface-treated on a surface of aluminum or stainless steel, but is not limited thereto. Also, each of the first and second positive electrode foils 1011 and 1012 may have fine unevennesses on a surface thereof to improve bonding force of the positive electrode active material.

Each of the first and second negative electrode foils 1021 and 1022 is made of a material having conductivity without causing a chemical change. For example, the material may be copper, stainless steel, nickel, titanium, calcined carbon, a material in which carbon, nickel, titanium, silver, or the like is surface-treated on a surface of copper or stainless steel, or an aluminum-cadmium alloy, in particular, preferably be copper that is plated with nickel, but is not limited thereto. Also, each of the first and second negative electrode foils 1021 and 1022 may have fine unevennesses on a surface thereof to improve bonding force of the negative electrode active material.

The positive electrode insulating layer 1013 is stacked between the first positive electrode foil 1011 and the second positive electrode foil 1012 to insulate the first positive electrode foil 1011 and the second positive electrode foil 1012 from each other. Also, the negative electrode insulating layer 1023 is stacked between the first negative electrode foil 1021 and the second negative electrode foil 1022 to insulate the first negative electrode foil 1021 and the second negative electrode foil 1022 from each other. As a result, even if the electrode assembly 11 is damaged due to the external impact, one surface and the other surface of one electrode may be electrically disconnected from each other to prevent the risk of explosion due to the short circuit from occurring, thereby securing safety. Each of the positive electrode insulating layer 1013 and the negative electrode insulating layer 1023 may be made of at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Particularly, a polymer such as a nylon resin or polyethylene terephthalate (PET) having mainly abrasion resistance and heat resistance is used.

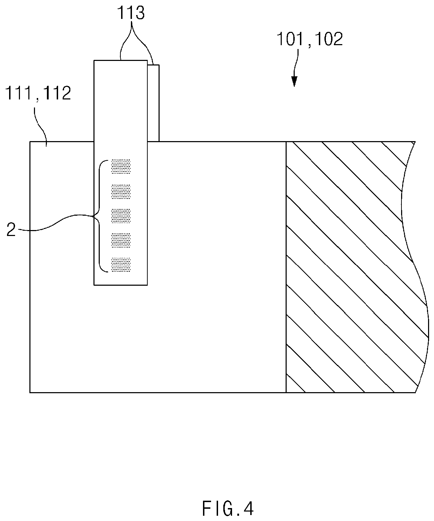

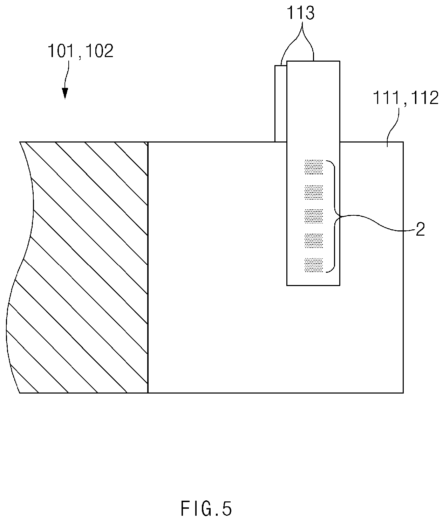

FIG. 3 is a schematic side view illustrating a configuration in which the plurality of electrode leads 113 are connected to the non-coating portions 111 and 112 of the positive electrode foils 1011 and 1012 and the negative electrode foils 1021 and 1022, respectively, FIG. 4 is a schematic top view illustrating a configuration in which the plurality of electrode leads 113 are connected to the non-coating portions 111 and 112, and FIG. 5 is a schematic bottom view illustrating a configuration in which the plurality of electrode leads 113 are connected to the non-coating portions 111 and 112.

As described above, the positive electrode lead 1131 has one end connected to the positive electrode non-coating portion 111 and the other end that is drawn out from the upper end of the electrode assembly 11 and electrically connected to the cap assembly 13. Also, the negative electrode lead 1132 has one end connected to the negative electrode non-coating portion 112 and the other end that is drawn out from the lower end of the electrode assembly 11 and is connected to the bottom portion of the battery can 12.

The positive electrode lead 1131 and the negative electrode lead 1132 may be made of materials different from each other. That is, the positive electrode lead 1131 may be made of the same material as the positive electrode foils 1011 and 1012 of the positive electrode collector 101, i.e., made of an aluminum (Al) material, and the negative electrode lead 1132 may be made of the same material as the negative electrode foils 1021 and 1022 of the negative electrode collector 102, i.e., made of a copper (Cu) material or a copper material coated with nickel (Ni).

If the electrode collectors 101 and 102 are formed in the single-layered structure, even if one electrode lead 113 is connected to only one surface of each of the non-coating portions 111 and 112, the whole of electricity generated inside the electrode assembly 11 may be sufficiently supplied to the outside of the secondary battery 1.

However, according to an embodiment of the present invention, since the electrode collectors 101 and 102 are formed in the multilayered structure in which the electrode insulating layers 1013 and 1023 are stacked between the first and second electrode foils, if one electrode lead 113 is connected to one electrode foil, the other electrode foil is not connected to the electrode lead 113, and thus, the electricity generated inside the electrode assembly 11 is completely supplied to the outside. Therefore, all of the plurality of electrode leads 113 have to be connected to the electrode foils, respectively.

As illustrated in FIG. 3, the plurality of electrode leads 113 include two positive electrode leads 1131, which are respectively connected to the first positive electrode foil 1011 and the second positive electrode foil 1012, and two negative electrode leads 1132, which are respectively connected to the first negative electrode foil 1021 and the second negative electrode foil 1022.

Particularly, the two positive electrode leads 1131 are connected to the positive electrode non-coating portion 111 of the first positive electrode foil 1011 and the positive electrode non-coating portion 111 of the second positive electrode foil 1012, respectively. Also, the two negative electrode leads 1132 are connected to the negative electrode non-coating portion 112 of the first negative electrode foil 1021 and the negative electrode non-coating portion 112 of the second negative electrode foil 1022, respectively. As a result, the whole of the electricity generated inside the electrode assembly 11 may be supplied to the outside of the secondary battery 1 through the plurality of electrode leads 113. The positive electrode lead 1131 and the negative electrode lead 1132 may be connected to the positive electrode non-coating portion 111 and the negative electrode non-coating portion 112 by ultrasonic welding or spot welding, respectively. Also, the welding may be repeatedly performed along a longitudinal direction of the positive electrode lead 1131 and the negative electrode lead 1132 to form a plurality of welding portions 2 arranged in a line as illustrated in FIGS. 4 and 5.

However, this method requires the plurality of electrode leads 113, and since the plurality of electrode leads 113 have to be separately welded to the first and second electrode foils, manufacturing cost and time are excessively consumed.

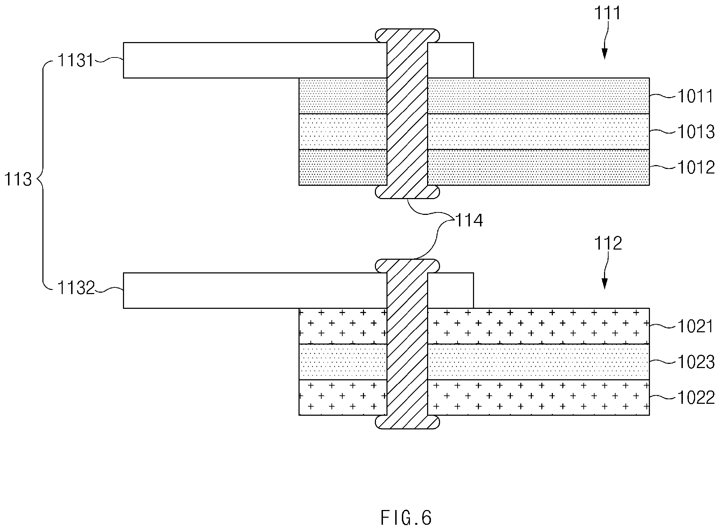

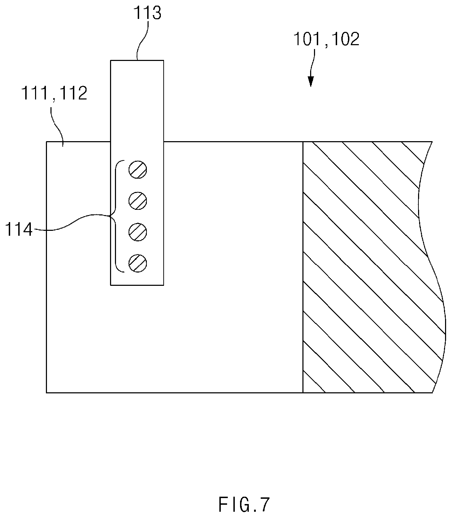

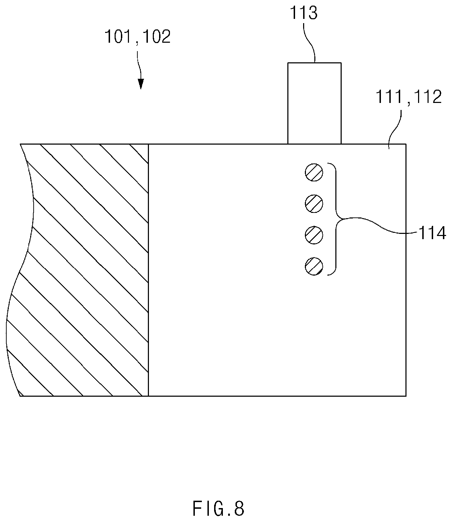

FIG. 6 is a schematic side view illustrating a configuration in which the electrode leads 113 are respectively connected to the non-coating portions 111 and 112 of the positive electrode foils 1011 and 1012 and the negative electrode foils 1021 and 1022 according to an embodiment of the present invention, FIG. 7 is a schematic top view illustrating a configuration in which the electrode leads 113 are connected to the non-coating portions 111 and 112, and FIG. 8 is a schematic bottom view illustrating a configuration in which the electrode leads 113 are connected to the non-coating portions 111 and 112.

According to an embodiment of the present invention, the electrode collectors 101 and 102 may have the multilayered structure including the electrode insulating layers 1013 and 1023, and the conductive coupling part 114 may pass through the non-coating portions 111 and 112 of the electrode collectors 101 and 102 and the electrode lead 113 together so as to connect the non-coating portions 111 and 112 to the electrode lead 113. As a result, the whole of the electricity generated inside the electrode assembly 11 may be sufficiently supplied to the outside through only the one electrode lead 113.

For this, a method for manufacturing an electrode assembly 11 according to an embodiment of the present invention includes: a step of applying an electrode active material to at least a portion of each of electrode collectors 101 and 102, which are formed by sequentially stacking first electrode foils 1011 and 1021, electrode insulating layers 1013 and 1023, and second electrode foils 1012 and 1022, to manufacture electrodes; a step of stacking the electrodes and a separator; and a step of connecting an electrode lead 113 to non-coating portions 111 and 112 that are not coated with the electrode active material on the electrode collectors 101 and 102. Here, in the step of connecting the electrode lead 113, a coupling part 114 passes through the electrode collectors 101 and 102 and the electrode lead 113 together to connect the electrode collectors 101 and 102 to the electrode lead 113.

Also, the electrode assembly 11 manufactured through the above-described method according to an embodiment of the present invention includes: an electrode coated with an electrode active material on at least a portion of each of electrode collectors 101 and 102; a separator stacked between the electrodes; an electrode lead 113 connected to non-coating portions 111 and 112 that are not coated with the electrode active material on the electrode collectors 101 and 102; and a coupling part 114 configured to pass through the electrode collectors 101 and 102 and the electrode lead 113 together so as to connect the electrode collectors 101 and 102 to the electrode lead 113. The electrode collectors 101 and 102 are formed by sequentially stacking first electrode foils 1011 and 1021, electrode insulating layers 1013 and 1023, and second electrode foils 1012 and 1022.

One electrode lead 113 is in contact with the first electrode foils 1011 and 1021 of the electrode collectors 101 and 102. Also, the coupling part 114 passes through the electrode collectors 101 and 102 and the electrode lead 113 together to connect the electrode collectors 101 and 102 to the electrode lead 113. Particularly, as illustrated in FIG. 6, first, one positive electrode lead 1131 is in contact with the first positive electrode foil 1011 on the non-coating portions 111 and 112 of the positive electrode collector 101, and one negative electrode lead 1132 is in contact with the first negative electrode foil 1021 on the non-coating portions 111 and 112 of the negative electrode collectors 102. Also, one coupling part 114 passes through the positive electrode collector 101 and the positive electrode lead 1131 together to connect the positive electrode collector 101 to the positive electrode lead 1131, and the other coupling part 114 passes through the negative electrode collector 102 and the negative electrode lead 1132 together to connect the negative electrode collector 102 to the negative electrode lead 1132

According to an embodiment of the present invention, the coupling part 114 is a rivet. Thus, the electrode collectors 101 and 102 and the electrode lead 113 may be connected through rivet coupling using the rivet. Here, the rivet may be coupled after performing a separate punching operation on the electrode collectors 101 and 102 and the electrode lead 113, but it is preferable that the rivet passes and connects the electrode collectors 101 and 102 and the electrode lead 113 without performing the separate punching operation using a rivet gun. When the rivet coupling is performed on the electrode collectors 101 and 102 and the electrode lead 113, heads at both ends of the rivet are formed larger than a size of a hole through which the rivet is fixed to prevent the rivet from being separated to the outside.

Also, the rivet coupling is repeatedly performed along a longitudinal direction of the positive electrode lead 1131 and the negative electrode lead 1132, and as illustrated in FIGS. 7 and 8, a plurality of coupling parts 114 are arranged in a line. As a result, the electrode collectors 101 and 102 and the electrode lead 113 may be more firmly connected to each other.

When the coupling part 114 connects the electrode collectors 101 and 102 to the electrode lead 113, the first electrode foils 1011 and 1021, all of the electrode insulating layers 1013 and 1023, and the second electrode foils 1012 and 1022 of the electrode collectors 101 and 102 may be penetrated. Also, the coupling part 114 is made of a conductive material so that electricity is conducted. Thus, the electricity generated by the first electrode foils 1011 and 1021 may be supplied to the outside through the directly connected electrode lead 113, and the electricity generated by the second electrode foils 1012 and 1022 may be supplied to the outside after being transmitted to the electrode lead 113 through the conductive coupling part 114. Thus, the whole of the electricity generated inside the electrode assembly 11 may be sufficiently supplied to the outside with only the one electrode lead 113.

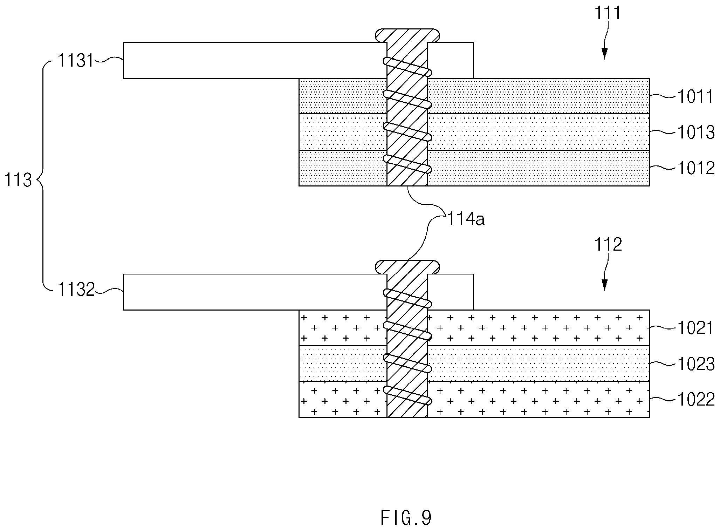

FIG. 9 is a schematic side view illustrating a configuration in which electrode leads 113 are respectively connected to non-coating portions 111 and 112 of positive electrode foil 1011 and 1012 and negative electrode foils 1021 and 1022 according to another embodiment of the present invention.

According to an embodiment of the present invention, the coupling part 114 may be the rivet, but according to another embodiment of the present invention, the coupling part 114a may be a screw. Thus, the electrode collectors 101 and 102 and the electrode lead 113 may be connected through screw coupling using the screw. Here, the electrode collectors 101 and 102 and the electrode lead 113 may be screw-coupled after performing a separate punching operation. If the punching operation for forming a screw thread is perforation, it may be connected by inserting only a bolt into a through-hole. However, if the punching operation is performed without forming the screw thread, after inserting the bolt from one side of the through-hole, a nut may be coupled to an end of the bolt protruding to the other side. In this case, the screw may not have a sharp tip. However, the present invention is not limited thereto. For example, the screw may directly rotate so as to be directly inserted while performing the punching operation of forming the screw thread in the electrode collectors 101 and 102 and the electrode lead 113. In this case, the screw has to have a sharp tip. When the screw coupling is performed on the electrode collectors 101 and 102 and the electrode lead 113, the screw thread formed in the through-hole and the screw thread of the screw itself are coupled to fix the screw so as not to be separated to the outside.

Those with ordinary skill in the technical field of the present invention pertains will be understood that the present invention can be carried out in other specific forms without changing the technical idea or essential features. Therefore, the above-disclosed embodiments are to be considered illustrative and not restrictive. Accordingly, the scope of the present invention is defined by the appended claims rather than the foregoing description and the exemplary embodiments described therein. Various modifications made within the meaning of an equivalent of the claims of the invention and within the claims are to be regarded to be in the scope of the present invention.

## Claims

1. A method for manufacturing an electrode assembly, the method comprising:
a step of applying an electrode active material to at least a portion of an electrode collector, which is formed by sequentially stacking a first electrode foil, an electrode insulating layer, and a second electrode foil, to manufacture an electrode;
a step of stacking the electrode and a separator; and
a step of connecting an electrode lead to a non-coating portion that is not coated with the electrode active material on the electrode collector,
wherein, in the step of connecting the electrode lead, a coupling part passes through the electrode collector and the electrode lead together to connect the electrode collector to the electrode lead.

2. The method of claim 1, wherein, in the step of connecting the electrode lead, the electrode collector and the electrode lead are connected to each other through rivet coupling.

3. The method of claim 1, wherein, in the step of connecting the electrode lead, the electrode collector and the electrode lead are connected to each other through screw coupling.

4. The method of claim 1, wherein, in the step of connecting the electrode lead, the coupling part is made of a conductive material.

5. The method of claim 1, wherein, in the step of connecting the electrode lead, the coupling part passes through all of the first electrode foil, the electrode insulating layer, and the second electrode foil of the electrode collector.

6. An electrode assembly comprising:
an electrode coated with an electrode active material on at least a portion of an electrode collector;
a separator stacked between the electrodes;
an electrode lead connected to a non-coating portion that is not coated with the electrode active material on the electrode collector; and
a coupling part configured to pass through the electrode collector and the electrode lead together so as to connect the electrode collector to the electrode lead,
wherein the electrode collector is formed by sequentially stacking a first electrode foil, an electrode insulating layer, and a second electrode foil.

7. The electrode assembly of claim 6, wherein the coupling part comprises a rivet.

8. The electrode assembly of claim 6, wherein the coupling part comprises a screw.

9. The electrode assembly of claim 6, wherein the coupling part is made of a conductive material.

10. The electrode assembly of claim 6, wherein the coupling part passes through all of the first electrode foil, the insulating layer, and the second electrode foil of the electrode collector.
